# EUROPEAN PATENT SPECIFICATION

(11) **EP 2 208 761 B1**
(45) Date of publication and mention of the grant of the patent: **10.10.2012**
(21) Application number: 09150759.0
(22) Date of filing: 16.01.2009
(51) Int. Cl.: C09C 1/02, C09C 1/36, C09C 1/40, C09C 1/42

(54) **Process to prepare self-binding pigment particles implementing acrylic comb copolymers with hydrophobic groups as coupling agents, self binding pigment particles and uses thereof**
Verfahren zur Herstellung selbstbindender Pigmentpartikel zur Implementierung von Acrylwaben-Copolymeren mit hydrophoben Gruppen als Haftmittel, selbstbindende Partikel und Verwendungen damit
Procédé de préparation de particules de pigment autoliantes impliquant des copolymères acryliques à structure en peigne dotés de groupes hydrophobes en tant qu'agents de couplage, particules de pigment autoliantes et leurs utilisations

(43) Date of publication of application: 21.07.2010
(73) Proprietor: Omya Development AG, 4665 Oftringen (CH)
(72) Inventor: Gane, Patrick A.C., 4852 Rothrist (CH); Hunziker, Philipp, 3007 Bern (CH)
(74) Representative: Tiefbrunner, Vera

(56) References cited:
- EP-A- 1 990 375
- EP-A- 1 990 376
- EP-A- 1 997 838
- WO-A-2008/044118
- FR-A- 2 913 420

## Description

Binders and mineral materials are among the main constituents of paper coating colours. The former, generally latex-based and in the form of aqueous suspensions or dispersions, provide the necessary adhesion and cohesion between the elements forming the paper coating. The latter, commonly calcium carbonate, may provide improvements in paper quality, notably relative to its optical properties.

The concept of self-binding pigment particles is known to industry: it refers to distinct, solid particles, formed of mineral material and binder that are intimately bound to one another. The internal cohesion forces are such as to provide the self-binding pigment particles with excellent mechanical stability. Such particles may be directly implemented in a variety of applications.

Implementing self-binding pigment particles avoids the logistic difficulties of handling mineral materials and binders separately, and further avoids the unwanted physical and chemical interactions developed in comparable mixtures of minerals and binders. Such issues are notably referred to in "Physical and Chemical Modifications in latex binders and their effects on the coating colour rheology" (Advanced Coating Fundamentals Symposium, San Diego, CA, USA, May 4-5,2001, pp 108-123), which underlines the negative effects of implementing mixtures of calcium carbonate and styrene-butadiene latex binders.

Self-binding pigment particles are prepared by a process implementing at least one step of grinding mineral materials in the presence of binder, where grinding refers to an operation leading to a reduction in the particle size; the mineral materials in the self-binding pigment particles have a smaller diameter than the initial mineral material used to produce them. Such self-binding pigment particles and variations thereon are described in a number of documents, including WO 2006 008657, WO 2006 128814, WO 2008 139292 and WO 2008 139286, as well as the prior art discussed therein.

It has generally been remarked that the use of a "coupling agent", such as an ethylene-acrylic acid Poligen™ WE 4, in addition to the mineral material and binder during the self-binding pigment particle production process, provides for improved self-binding character in the formed pigment particles. Indeed, such coupling agents are thought to facilitate the development of a strong adhesion of the binders, including binders of natural origin such as starch, proteins such as casein, cellulose and cellulosic derivatives such as ethylhydroxyethyl cellulose (EHEC) and/or carboxymethylcellulose (CMC), and synthetic binders such as polyvinyl acetate (PVA), acrylic, acrylic ester, acrylonitrile, styrene or styrene-acrylic binders, at the carbonate surface. Such binders may be in the form of a solution, a suspension or an emulsion, such as Hycar^{™} acrylic emulsions manufactured by Lubricol^{™}.

WO 2006 008657 described a process co-grinding inorganic materials in the presence of binder in an aqueous environment. The self-binding character is evaluated based on a crushing test, performed on tablets formed of the co-ground material. Of the six examples provided, four of these (examples 1, 3, 5 and 6) implement a binder as well as Poligen™ WE 4 (commercialised by BASF^{™}). Only examples 5 and 6 lead to final solids contents of the self-binding pigment particle suspension of greater than 50% by weight; to obtain a workable suspension viscosity at these solids, it is necessary to add a wetting agent and a dispersing agent.

WO 2006 128814 refers to the impact of such self-binding pigment particles (called "polymer-pigment hybrid") on the properties of paper in which it is applied. Notably, an improvement of the optical properties, such as opacity, is observed. This document describes the formation of such self-binding pigment particles by grinding calcium carbonate, in an aqueous environment, with a styrene-acrylate binder as well as Poligen™ WE 4. However, none of the resulting suspensions of self-binding pigment particles obtained have a solids content of greater than 30% by weight.

FR 2 913 420 A as well as the prior art cited therein relates to grinding agents for the use in dry grinding calcium carbonate. It is the object of FR 2 913 420 A to provide a grinding agent not leading to a high quantity of volatile organic compounds (VOC) as it is the case with glycol-based grinding aid agents, as well as of a calcium carbonate, which may be used in a composition with a hydraulic binder base such as cement, concrete or mortar with a much higher degree of spreading compared with a calcium carbonate which is dry ground with a diethylene glycol. This is achieved by dry grinding the carbonate in the presence of a grinding aid agent, which is a copolymer, consisting of at least one anionic monomer chosen from among acrylic acid, methacrylic acid and their blends, and of at least one non-ionic monomer containing an alkoxy or hydroxy polyalkyleneglycol group. No mention is made however of the provision of self binding particles or their improvement.

Finally, WO 2008 139292 and WO 2008 139286 describes a process implementing a step of grinding a pigmentary material in the presence of binder, followed by the addition of a specified inverse emulsion; examples implementing Poligen™ WE 4 in addition to binder are ground with calcium carbonate at 20% solids content. Concentrating this suspension leads to a 40% solids content slurry.

Improving the self-binding pigment particle production process remains of interest to the skilled man, and in his continued effort to do so, the Applicant has developed a process to produce self-binding pigment particles comprising the following steps:
a) at least one step of grinding at least one binder and at least one mineral material in an aqueous environment to obtain a suspension;
b) optionally, at least one step of concentrating the suspension obtained following step a), optionally in the presence of at least one dispersing aid;
c) optionally, drying the suspension obtained following steps a) or b) ;
characterised in that :
- prior to and/or during step a), a copolymer is added in the form of an aqueous solution, said copolymer resulting from the polymerisation of:
   2.1) at least one anionic monomer that is an alkene;
   2.2) at least one oxyalkylated monomer that is an alkene, wherein the oxyalkyl group has a terminal hydrophobic alkyl, aryl, alkyl aryl or aryl alkyl group having 10 to 32 carbon atoms;
   2.3) optionally, at least one other monomer that is an acrylic ester, a preferred acrylic ester being ethyl acrylate, and/or an unsaturated amide, a preferred unsaturated amide being acrylamide;
wherein said oxyalkylated monomer is a monomer of Formula (I): 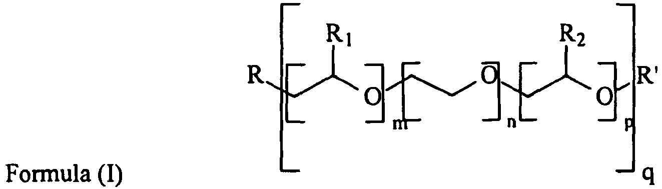 wherein:
- m, n, p and q are whole numbers having a value of less than 150, and at least one of m, n, and p has a value of greater than 0, q has a value greater than or equal to 1, preferably such that 15 ≤ (m+n+p)q ≤ 150, more preferably such that 20 ≤ (m+n+p)q ≤ 60, and even more preferably such that 25 ≤ (m+n+p)q ≤ 50;
- R represents a radical having a polymerisable alkene group,
- R₁ and R₂ are the same or different, and represent hydrogen or alkyl groups,
- R' represents an alkyl, aryl, alkyl aryl or aryl alkyl hydrocarbon chain having 10 to 32 carbon atoms.

For the purpose of the present Application, an anionic monomer is a monomer which, when introduced into an aqueous environment in the form of a monomer or as a polymerised monomer in a polymer, undergoes a dissociation to become anionic.

Implementing the inventive process with its selected coupling agent not only allows the skilled man to directly obtain a high solids content suspension, but the total organic content (TOC) of the aqueous phase of the suspension is similar or decreased when prepared by the process of the invention, relative to prior art processes.

For completeness, the Applicant would like to remark that WO 2004/041882, WO 2004/0410883, unpublished French patent application with the filing number 0701591, unpublished European patent application with the filing number 07024440.5 and unpublished European patent application with the filing number 08014443.9, which although mentioning similar copolymers as implemented herein, do not aim at resolving the technical problem of the present invention nor implement the specified copolymers in the process of the present invention.

Without wishing to be bound to any theory, the Applicant believes that the lower the TOC value of the suspension's aqueous phase, the greater the adhesive forces within the self-binding pigment particles suspended therein. The low TOC values suggest that only small quantities of binder, surfactants (serving to stabilise this binder) and coupling agent remain present in the aqueous phase. The result is that the process water can be reused with relative ease, which represents another advantage of the present invention.

In an embodiment which does not implement step b) of concentrating or step c) of drying, the process of the invention may lead directly to a high solids suspension of self-binding pigment particles. Indeed, the process of the invention makes it possible to avoid a mandatory concentration step.

For the purpose of the present invention, concentrating refers to a step that increases the solids content of a suspension. Such a step may, for example, implement a filtration, centrifugation or any other means of mechanically concentrating.

In a preferred embodiment, the process of the invention implements the above copolymer such that said monomers are present in said copolymer in the following % by weight relative to the total copolymer weight:
2.1) from 5 to 95%, preferably from 50 to 95% and more preferably from 70 to 95% by weight of said anionic monomer(s);
2.2) from 5 to 95%, preferably from 5 to 50% and more preferably from 5 to 30% by weight of said oxyalkylated monomer(s);
2.3) from 0 to 30%, and preferably from 0 to 20% by weight of said other monomer(s).

In another preferred embodiment, said anionic monomer is selected from among acrylic acid, methacrylic acid and mixtures thereof.

It is preferred that in Formula (I) of said oxyalkylated monomer, R' be a branched hydrocarbon chain having 10 to 24 carbon atoms, preferably resulting from the condensation of linear alcohols according to the Guerbet reaction, R' being more preferably selected from among 2-hexyl-1-decanyl, 2-octyl-1-dodecanyl and mixtures thereof.

Alternatively, R' may be a polystyryl phenol, and preferably selected from among distyrylphenol, tristyrylphenol and mixtures thereof.

The radical R is preferably selected from among (a) hydrocarbon radicals such as vinyl radicals and/or allyl radicals, (b) radicals forming oxyalkyl esters such as radicals of: acrylic acid and/or methacrylic acid and/or maleic acid, (c) radicals forming N-oxyalkylurethanes, such as radicals of: acrylurethane and/or methacrylurethane and/or α-α' dimethyl-isopropenyl-benzylurethane and/or allylurethane, (d) radicals forming oxyalkyl ethers such as radicals forming vinyl oxyalkyl ethers and/or radicals forming allyl oxyalkyl ethers and/or radicals forming oxyalkylurethanes, (e) radicals forming oxyalkyl amides, (f) radicals forming oxyalkyl imides, and (g) mixtures thereof, and more preferably R is a radical forming an oxyalkyl methacrylic ester.

In another embodiment of the process of the present invention, said copolymer features a molar % of neutralisation of any acidic functional groups by one or more neutralising agent(s) of from 0 to 50 %, preferably from 0 to 35 %, and more preferably from 0 to 20 %. Preferred neutralisation agents include hydroxides of sodium, potassium, lithium or mixtures thereof.

In the case where step b) is implemented, said dispersing agent in any step b) may be an acrylic acid homo or copolymer.

In the case where step b) is implemented, said dispersing agent is preferably implemented in an amount of from 0.01 to 2 % by weight, relative to the dry weight of mineral material.

During step a), it is preferred that the solids content of the suspension being ground be from 1 to 80 %, and preferably from 15 to 60 % by dry weight relative to the total weight of said suspension.

The mineral material ground in step a) is preferably selected from among metal oxides such as titanium dioxide and/or aluminium trioxide, metal hydroxides such as aluminium trihydroxide, sulphites, silicates such as talc and/or kaolin clay and/or mica, carbonates such as calcium carbonate and/or dolomite, gypsum, satin white and mixtures thereof.

The binder of step a) is preferably selected from among (a) binders of natural origin such as starch, proteins such as casein, cellulose and cellulosic derivatives such as ethylhydroxyethyl cellulose (EHEC) and/or carboxymethylcellulose (CMC), and (b) synthetic binders, such as polyvinyl acetate (PVA), acrylic binders such as acrylic ester binders and/or acrylonitrile binders and/or styrene-acrylic binders, styrene binders, styrene-butadiene binders and butadiene binders, and (c) mixtures thereof.

During step a), it may be advantageous to employ a weight proportion of mineral material:binder contained in the suspension of between 99:1 and 1:99, and preferably of between 70:30 and 30:70.

The self-binding pigment particles obtained by the process of the invention described here-above may be useds in plastics and paints. Such pigment particles can also find uses in paper industry.

### EXAMPLES

In each of the following examples, grinding was performed in a Dyno-Mill™ grinder featuring a fixed cylinder and a rotating element, using zirconium-based grinding beads having an initial bead diameter of between 0.6 and 1 mm. In the grinding chamber of 1 400 cm³, the total volume occupied by the grinding beads was 1 000 cm³; their total weight was 2 700 g. The circumferential speed of the grinder was 10 m/s. The pigment suspension was recycled at a rate of 40 litres/hour. A 200 µm separation sieve was located at the exit of the Dyno-Mill™ in order to separate the suspension from the grinding beads. The temperature during each of the grinding trials was maintained at approximately 30°C.

For each of the tests below, polymer concentrations are given in % dry weight relative to the dry weight of mineral material. Unless otherwise indicated, all polymers implemented in the process of the invention are partially neutralised such that 10 mole % of their carboxylic sites are neutralised by sodium ions. Partial neutralisation of the polymer took place by adding sodium hydroxide at the moment of dispersant addition, in order to regulate the pH to between 8.5 and 10.

### TOC measurement method

TOC measurements were made using a Total Organic Carbon Analyzer TOC-VCSH, commercialised by SHIMADZU™, equipped with an ASI-V sample injector and using TOC-Control V (SHIMADZU™) software.

Calibration of the instrument was undertaken using two solutions.

The first solution contained 1 000 ppm of total carbon and was prepared by introducing 2.125 g of potassium hydrogeno phthalate (previously dried at 110°C and cooled in a desiccator) in a 1 litre flask and thereafter adding water up to the 1 litre mark.

The second solution contained 1 000 ppm of inorganic carbon, and was prepared by introducing 4.41 g of sodium carbonate (previously dried at 280°C and cooled in a desiccator) and 3.5 g of sodium hydrogen carbonate in a 1 litre flask and thereafter adding water up to the 1 litre mark.

The calibration curves for 1 to 100 ppm of total carbon were prepared using the TC-100-23082006.cal procedure, and the curves for 0 to 50 ppm, of inorganic carbon were prepared using the IC50-23082006.cal procedure.

For each of the tests below, filtrate samples for the TOC measurements were obtained by filtering the aqueous suspensions following grinding as described below. The amount of Total Organic Carbon (TOC) was then determined using the TOC-280820006.mand procedure.

### Example 1

This example represents a process to prepare an aqueous suspension of self-binding pigment particles involving a step of grinding calcium carbonate, a binder and a coupling agent, as well as a concentration step followed by a dispersion step, unless otherwise indicated.

In each of the following tests, the listed coupling agent as well as 9.5 % by weight of a styrene-acrylate binder (commercialised by BASF™ under the trade name Acronal™ S 728) were added to an aqueous suspension of natural calcium carbonate (Norwegian marble) having a solids content of 17 % by dry weight.

Following grinding, the weight fractions of particles in suspension having a diameter of less than 1 and less than 2 µm (% < 1 µm and % < 2 µm, respectively) were determined using Sedigraph™ 5100 instrumentation commercialised by MICROMERITICS™.

Each suspension was then concentrated by filtration on a Büchner™ filter press to obtain a filter cake. The amount of Total Organic Carbon in the collected water (filtrate) was determined according to the method described hereabove.

The obtained filter cakes were subsequently dispersed using the listed dispersing agent(s) in order to obtain a suspension having a solids content of approximately 50 % by weight.

The Brookfield™ viscosities of the obtained suspensions at 25°C under 10 and 100 rpm were determined at time *t =* 0 (µ_{10 *t*=0}, µ_{100 *t*=0}), *t* = 8 days (measured prior to agitation, µ_{10 *t*=8 AVAG,} µ_{100 *t*=8 AVAG}, as well as after agitation, µ_{10 *t*=8 APAG}, µ_{100 *t*=8 APAG}) using spindle number 3.

### Test n° 1

This test represents the prior art and implements:
- as coupling agent: 0.5 % by dry weight of Poligen™ WE 4, referred to hereafter as coupling agent n°1 (AG1),
- as dispersant:
- 0.6 % by dry weight of a copolymer consisting of (by weight) 13 % acrylic acid, 15 % butyl acrylate, 31 % methacrylic acid and 40 % styrene, referenced AD1,
- 0.1 % by dry weight of a copolymer consisting of (by weight) 45 % maleic anhydride and 55 % acrylic acid, referenced AD2.

### Test n° 2

This test represents the prior art and implements:
- as coupling agent: 0.5 % by dry weight of Poligen™ WE 4, referenced AG1, and 0.2 % by dry weight of a homopolymer of acrylic acid having a molecular weight of 5 500 g/mol and wherein 70 mole % of the acid groups are neutralised by sodium ions and 30 mole % are neutralised by magnesium ions, referenced AG2,
- as dispersant: 0.6 % by dry weight of AD1, and 0.1 % by dry weight of AD2.

The TOC value was equal to 1 217 ppm, an overly high value. For this reason, no further tests were run using the obtained material from this trial.

### Test n° 3

This test represents a comparative example and implements:
- as coupling agent: 0.5 % by dry weight of an acrylic acid homopolymer having a molecular weight of 11 000 g/mol, referred to hereafter as coupling agent n° 2 and referenced AG3

The TOC value was overly high (greater than 12 000 ppm). Therefore, no further steps to concentrate and disperse the resulting product were implemented.

### Test n° 4

This test represents a comparative example and implements:
- as coupling agent: 0.5 % by dry weight of copolymer AD1 (also referenced AG4).

The TOC value was equal to 688 ppm, an overly high value.

### Test n° 5

This test represents a comparative example and implements:
- as coupling agent: 0.5 % by dry weight of a copolymer consisting of (by weight) 14 % acrylic acid, 5 % methacrylic acid and 81 % polyethylene glycol methoxy methacrylate having a molecular weight of 2 000 g/mol, referred to hereafter as coupling agent n° 5 and referenced AG5,
- and as dispersant: 0.6 % by dry weight of copolymer AD1, and 0.1 % by dry weight of copolymer AD2.

The TOC value was overly high (451 ppm), though lower than that obtained in Tests 2, 3 and 4.

### Test n° 6

This test represents a comparative example and implements:
- as coupling agent: 0.5 % by dry weight of a hydrosoluble copolymer consisting of (by weight) 85 % acrylic acid and 15.0 % by weight of a monomer of Formula (I) in which R represents a methacrylic ester, R' represents a linear alkyl chain having 8 carbon atoms, m = p = 0, q = 1, n = 25, referred to hereafter as coupling agent n° 6, referenced AG6,
- and as dispersant: 0.6 % by dry weight of copolymer AD1 and 0.1 % by dry weight of copolymer AD2.

The TOC was around 300 ppm, which remains high though not as high as measured in the previous tests. Overly high viscosity values were encountered on dispersing the filter cake (see Table 1).

### Test n° 7

This test represents the invention and implements:
- as coupling agent: 0.5 % by dry weight of a hydrosoluble copolymer consisting of (by weight) 60.0 % acrylic acid, 1.0 % methacrylic acid, 15 % ethyl acrylate and 24.0 % by weight of a monomer of Formula (I) in which R represents a methacrylic ester, R' represents 2-hexyl-1-decanyl, m = p = 0, q = 1, n = 25, referred to hereafter as coupling agent n° 7 and referenced AG7,
- and as dispersant: 0.6 % by dry weight of copolymer AD 1 and 0.1 % by dry weight of copolymer AD2.

### Test n° 8

This test represents the invention and implements:
- as coupling agent: 0.5 % by dry weight of a hydrosoluble copolymer consisting of (by weight) 85.0 % acrylic acid, and 15.0 % by weight of a monomer of Formula (I) in which R represents a methacrylic ester, R' represents 2-hexyl-1-dodecanyl, m = p = 0, q = 1, n = 25, referred to hereafter as coupling agent n° 8 and referenced AG8,
- and as dispersant: 0.6 % by dry weight of copolymer AD 1 and 0.1 % by dry weight of copolymer AD2.

### Test n° 9

This test represents the invention and implements:
- as coupling agent: 0.5 % by dry weight of a hydrosoluble copolymer consisting of (by weight) 85.0 % acrylic acid, and 15.0 % by weight of a monomer of Formula (I) in which R represents a methacrylic ester, R' represents a linear alkyl chain having 22 carbon atoms, m = p = 0, q = 1, n = 25, referred to hereafter as coupling agent n° 9 and referenced AG9,
- and as dispersant: 0.6 % by dry weight of copolymer AD 1 and 0.1 % by dry weight of copolymer AD2.

### Test n° 10

This test represents the invention and implements:
- as coupling agent: 0.5 % by dry weight of a hydrosoluble copolymer consisting of (by weight) 85.0 % acrylic acid, and 15.0 % by weight of a monomer of Formula (I) in which R represents a methacrylic ester, R' represents a branched alkyl chain having 32 carbon atoms, m = p = 0, q = 1, n = 25, referred to hereafter as coupling agent n° 10 and referenced AG10
- and as dispersant: 0.6 % by dry weight of copolymer AD1 and 0.1 % by dry weight of copolymer AD2.

### Test n° 11

This test represents the invention and implements:
- as coupling agent: 0.5 % by dry weight of a hydrosoluble copolymer consisting of (by weight) 85.0 % acrylic acid, and 15.0 % by weight of a monomer of Formula (I) in which R represents a nonylphenol, m = p = 0, q = 1, n = 25, referred to hereafter as coupling agent n° 11 and referenced AG11,
- and as dispersant: 0.6 % by dry weight of copolymer AD1 and 0.1 % by dry weight of copolymer AD2.

### Test n° 12

This test represents the invention and implements:
- as coupling agent: 0.5 % by dry weight of a hydrosoluble copolymer consisting of (by weight) 85.0 % acrylic acid, and 15.0 % by weight of a monomer of Formula (I) in which R represents a linear alkyl chain having 12 carbon atoms, m = p = 0, q = 1, n = 23, referred to hereafter as coupling agent n° 12 and referenced AG12,
- and as dispersant: 0.6 % by dry weight of copolymer AD1 and 0.1 % by dry weight of copolymer AD2.

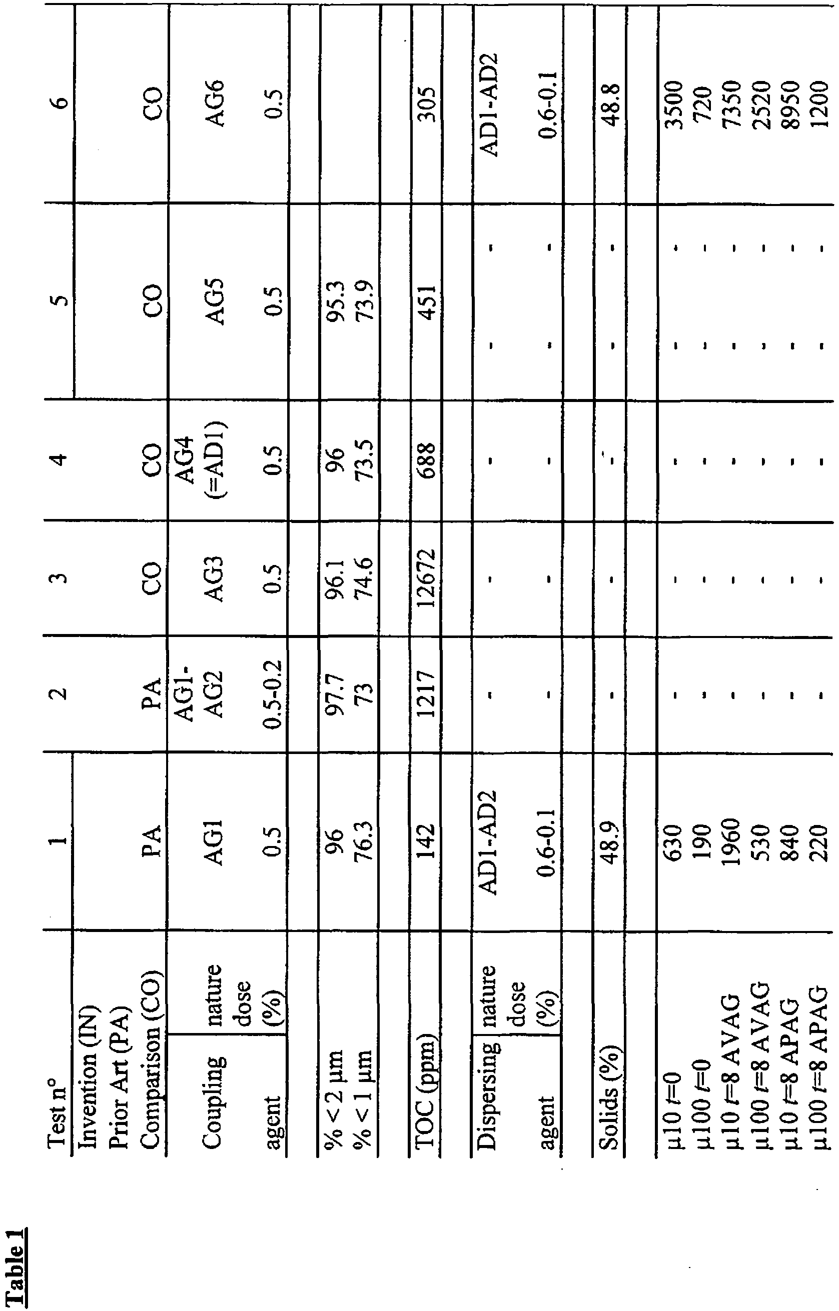

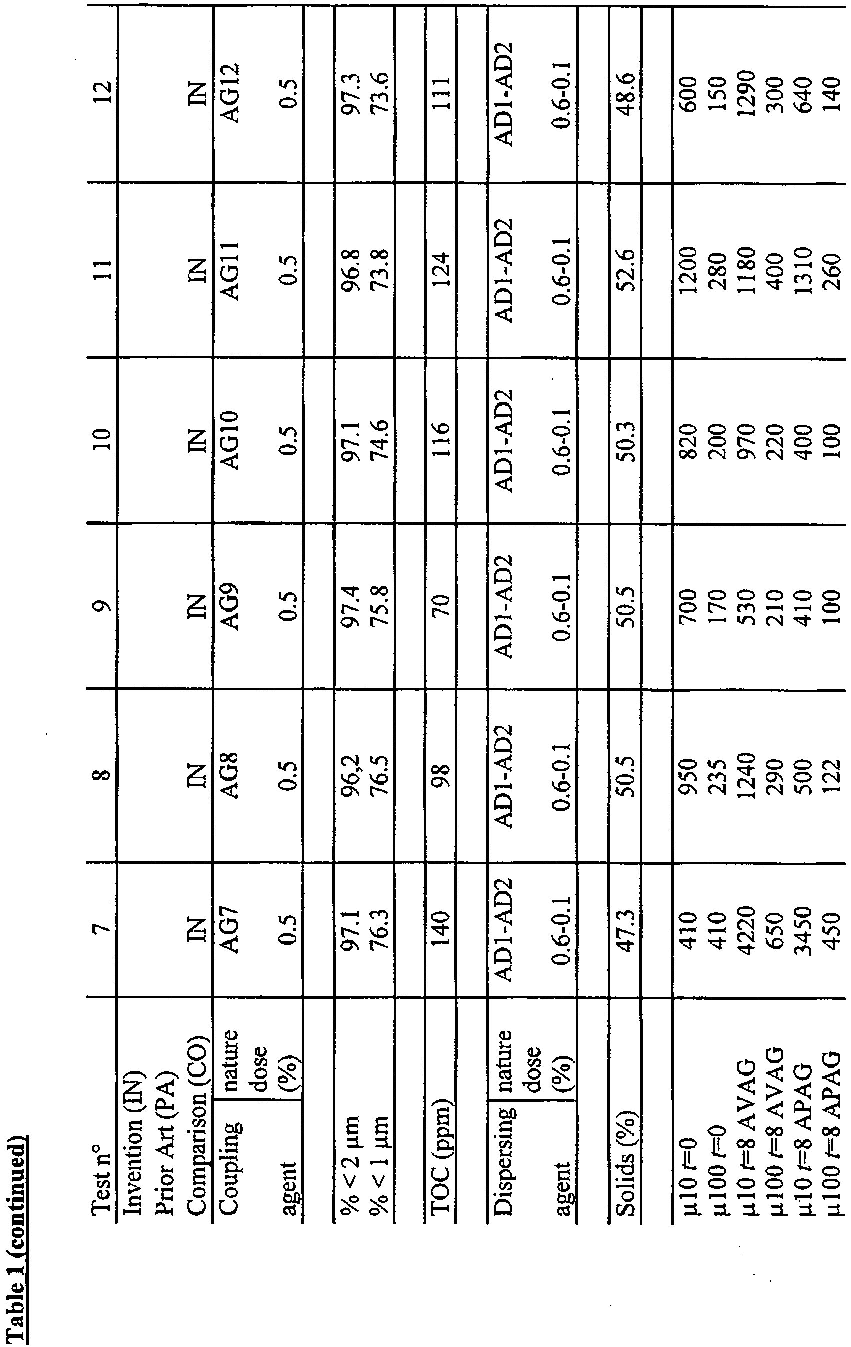

The above results demonstrate that only the process of the invention, implementing the selected coupling agents, lead to low TOC values (less than 200 ppm), as well as to time-stable aqueous suspensions of self-binding pigment particles.

### Example 2

This example represents a process to prepare an aqueous suspension of self-binding pigment particles involving a step of grinding calcium carbonate, a binder and a coupling agent, as well as a concentration step followed by a dispersing step, unless otherwise indicated.

The same protocol as in Example 1 was implemented, except that the dispersing was performed to reach a solids content of 68 % by dry weight.

### Test n° 13

This test represents the invention and implements:
- as coupling agent: 0.5 % by dry weight of copolymer AG7,
- and as dispersant: 0.6 % by dry weight of copolymer AD1 and 0.1 % by dry weight of copolymer AD2,

The obtained results (Table 2) show that the process of the invention, implementing the selected coupling agents lead to low TOC values (less than 200 ppm), as well as to time-stable aqueous suspensions of such pigments.

**Table 2**

| Test n° | | 13 |
|---|---|---|
| Coupling | nature | AG13(=AG7) |
| | dose | |
| agent | (%) | 0.5 |
| | | |
| % < 2 µm | | |
| % < 1 µm | | |
| | | |
| TOC (ppm) | | 141 |
| | | |
| Dispersing | nature | AD1-AD2 |
| | dose | |
| agent | (%) | 0.5-0.1 |
| | | |
| Solids (%) | | 68.8 |
| | | |
| µ10 *t*=0 | | 10 |
| µ100 *t*=0 | | 39 |
| µ10 *t*=8 AVAG | | 10 |
| µ100 *t*=8 AVAG | | 32 |
| µ110 *t*=8 APAG | | 20 |
| µ100 *t*=8 APAG | | 50 |

### Example 3

This example represents a process to prepare an aqueous suspension of self-binding pigment particles involving a step of grinding calcium carbonate, a binder and a coupling agent, without any subsequent dispersing step.

The same protocol as in Example 1 is implemented, except that the grinding is performed at a solids content of 70 % by dry weight. In this case, a fraction of the suspension was filtered following grinding and the TOC measurement made on the collected water.

Brookfield viscosity measurements were made directly on the suspension obtained following grinding.

### Test n° 14

This test represents the invention and implements as coupling agent 0.5 % by dry weight of copolymer AG7.

The results obtained (Table 3) show that the process according to the present invention, implementing the selected coupling agent, lead to low TOC values (less than 200 ppm), as well as to time-stable aqueous suspensions of such pigments. Moreover, this coupling agent allowed grinding to take place at a high solids content (70 % by dry weight).

**Table 3**

| Test n° | | 14 |
|---|---|---|
| Coupling | nature | AG 14(=AG7) |
| | dose | |
| agent | (%) | 0.5 |
| | | |
| %< 2 µm | | 97.7 |
| % < 1 µm | | 70.0 |
| | | |
| TOC (ppm) | | |
| | | |
| Solids (%) | | 70 |
| | | |
| µ10 *t*=0 | | 1250 |
| µ100 *t*=0 | | 350 |
| µ10 *t*=8 AVAG | | 1390 |
| µ100 *t*=8 AVAG | | 520 |
| µ10 *t*=8 APAG | | 1420 |
| µ100 *t*=8 APAG | | 610 |

## Claims

1. Process to prepare self-binding pigment particles comprising the following steps:
a) at least one step of grinding one or more binders and one or more mineral materials in an aqueous environment to obtain a suspension;
b) optionally, at least one step of concentrating the suspension obtained following step a), optionally in the presence of one or more dispersing aids;
c) optionally, drying the suspension obtained following steps a) or b) ;
**characterised in that** :
prior to and/or during step a), a copolymer is added in the form of an aqueous solution, said copolymer resulting from the polymerisation of:
2.1) at least one anionic monomer that is an alkene;
2.2) at least one oxyalkylated monomer that is an alkene, wherein the oxyalkyl group has a terminal hydrophobic alkyl, aryl, alkyl aryl or aryl alkyl group having 10 to 32 carbon atoms;
2.3) optionally, at least one other monomer that is an acrylic ester, a preferred acrylic ester being ethyl acrylate, and/or an unsaturated amide, a preferred unsaturated amide being acrylamide,
wherein said oxyalkylated monomer is a monomer of Formula (I): 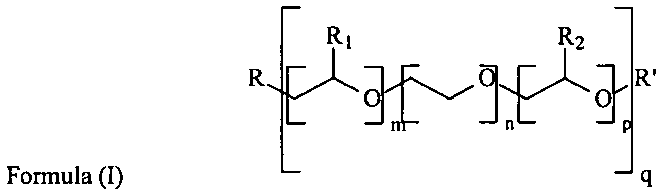 wherein:
- m, n, p and q are whole numbers having a value of less than 150, and at least one of m, n, and p has a value of greater than 0, q has a value greater than or equal to 1, preferably such that 15 ≤ (m+n+p)q ≤ 150, more preferably such that 20 ≤ (m+n+p)q ≤ 60, and even more preferably such that 25 ≤ (m+n+p)q ≤ 50;
- R represents a radical having a polymerisable alkene group,
- R₁ and R₂ are the same or different, and represent hydrogen or alkyl groups,
- R' represents an alkyl, aryl, alkyl aryl or aryl alkyl hydrocarbon chain having 10 to 32 carbon atoms.

2. The process according to claim 1,
**characterised in that** said monomers are present in said copolymer in the following % by weight relative to the total copolymer weight:
2.1) from 5 to 95 %, preferably from 50 to 95 % and more preferably from 70 to 95 % by weight of said anionic monomer(s);
2.2) from 5 to 95 %, preferably from 5 to 50 % and more preferably from 5 to 30 % by weight of said oxyalkylated monomer(s);
2.3) from 0 to 30 %, and preferably from 0 to 20 % by weight of said other monomer(s).

3. The process according to any one of claims 1 or 2,
**characterised in that** said anionic monomer is selected from among acrylic acid, methacrylic acid and mixtures thereof.

4. The process according to any one of the preceding claims,
**characterised in that** R' is a branched hydrocarbon chain having 10 to 24 carbon atoms, preferably resulting from the condensation of linear alcohols according to the Guerbet reaction, where said R' is preferably selected from among 2-hexyl-1-decanyl, 2-octyl-1-dodecanyl and mixtures thereof.

5. The process according to any one of the preceding claims,
**characterised in that** R' is a polystyryl phenol, and preferably selected from among distyrylphenol, tristyrylphenol and mixtures thereof.

6. The process according to any one of the preceding claims,
**characterised in that** the radical R is selected from among (a) hydrocarbon radicals such as vinyl radicals and/or allyl radicals, (b) radicals forming oxyalkyl esters such as radicals of: acrylic acid and/or methacrylic acid and/or maleic acid, (c) radicals forming N-oxyalkylurethanes, such as radicals of: acrylurethane and/or methacrylurethane and/or α-α' dimethyl-isopropenyl-benzylurethane and/or allylurethane, (d) radicals forming oxyalkyl ethers such as radicals forming vinyl oxyalkyl ethers and/or radicals forming allyl oxyalkyl ethers and/or radicals forming oxyalkylurethanes, (e) radicals forming oxyalkyl amides, (f) radicals forming oxyalkyl imides, and (g) mixtures thereof, and more preferably R is a radical forming an oxyalkyl methacrylic ester.

7. The process according to any one of claims 1 to 6,
**characterised in that** said copolymer features a molar % of neutralisation of any acidic functional groups by one or more neutralising agent(s) of from 0 to 50 %, preferably from 0 to 35 %, and more preferably from 0 to 20 %.

8. The process according to claim 7,
**characterised in that** said neutralisation agent is selected from among hydroxides of sodium, potassium, lithium or mixtures thereof.

9. The process according to any one of claims 1 to 8,
**characterised in that** said dispersing agent in any step b) is an acrylic acid homo or copolymer.

10. The process according to any one of claims 1 to 9,
**characterised in that** the solids content of the suspension ground during step a) is from 1 to 80 %, and preferably from 15 to 60 % by dry weight relative to the total weight of said suspension.

11. The process according to any one of claims 1 to 10,
**characterised in that** said mineral material is selected from among metal oxides such as titanium dioxide and/or aluminium trioxide, metal hydroxides such as aluminium trihydroxide, sulphites, silicates such as talc and/or kaolin clay and/or mica, carbonates such as calcium carbonate and/or dolomite, gypsum, satin white and mixtures thereof.

12. The process according to any one of claims 1 to 11,
**characterised in that** said binder is selected from among (a) binders of natural origin such as starch, proteins such as casein, cellulose and cellulosic derivatives such as ethylhydroxyethyl cellulose (EHEC) and/or carboxymethylcellulose (CMC), and (b) synthetic binders, such as polyvinyl acetate (PVA), acrylic binders such as acrylic ester binders and/or acrylonitrile binders and/or styrene-acrylic binders, styrene binders, styrene-butadiene binders and butadiene binders, and (c) mixtures thereof.

13. The process according to any one of claims 1 to 12,
**characterised in that** during step a) the weight proportion of mineral material:binder contained in the suspension is between 99:1 and 1:99, and preferably is between 70:30 and 30:70.

14. The process according to any one of claims 1 to 13,
**characterised in that** said copolymer is implemented in an amount corresponding to 0.1 to 2 % by dry weight relative to the dry weight of mineral material.

15. The process according to any one of claims 1 to 14,
**characterised in that** during any step b) from 0.01 to 2 % by weight, relative to the dry weight of mineral material, of at least one dispersing agent is added.

## Patentansprüche

1. Verfahren zur Herstellung von selbstbindenden Pigmentpartikeln, umfassend die folgenden Schritte:
a) wenigstens einen Schritt, bei dem ein oder mehrere Bindemittel und ein oder mehrere Mineralstoffmaterialien in einer wässrigen Umgebung vermahlen werden, um eine Suspension zu erhalten,
b) gegebenenfalls wenigstens einen Schritt, bei dem die in Anschluss an Schritt a) erhaltene Suspension konzentriert wird, gegebenenfalls in der Gegenwart von einem oder mehreren Dispergierungsmitteln,
c) gegebenenfalls Trocknen der in Anschluss an die Schritte a) oder b) erhaltenen Suspension,
**dadurch gekennzeichnet, dass**
vor und/oder während Schritt a) ein Copolymer in der Form einer wässrigen Lösung zugegeben wird, wobei das Copolymer resultiert aus der Polymerisation von:
2.1) wenigstens einem anionischen Monomer, das ein Alken ist,
2.2) wenigstens einem oxyalkylierten Monomer, das ein Alken ist, worin die Oxyalkylgruppe eine terminale hydrophobe Alkyl-, Aryl-, Alkylaryl- oder Arylalkylgruppe mit 10 bis 32 Kohlenstoffatomen aufweist,
2.3) gegebenenfalls wenigstens einem anderen Monomer, das ein Acrylsäureester ist, wobei ein bevorzugter Acrylsäureester Ethylacrylat ist, und/oder ein ungesättigtes Amid, wobei ein bevorzugtes ungesättigtes Amid Acrylamid ist,
worin das oxyalkylierte Monomer ein Monomer der Formel (I) ist: 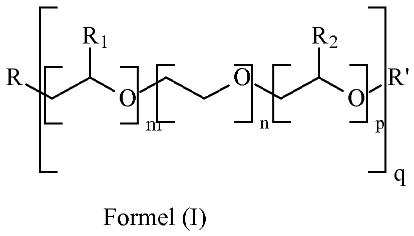 worin
- m, n, p und q ganze Zahlen mit einem Wert von kleiner 150 sind, und wenigstens eines von m, n und p einen Wert von grösser 0 aufweist, q einen Wert von grösser oder gleich 1 hat, bevorzugt derart, dass 15 ≤ (m+n+p)q ≤ 150, bevorzugter derart, dass 20 ≤ (m+n+p)q ≤ 60, und noch bevorzugter derart, dass 25 ≤ (m+n+p)q ≤ 50,
- R einen Rest mit einer polymerisierbaren Alkengruppe darstellt,
- R₁ und R₂ gleich oder verschieden sind und Wasserstoff- oder Alkylgruppen darstellen,
- R' eine Alkyl-, Aryl-, Alkylaryl- oder Arylalkylkohlenwasserstoffkette mit 10 bis 32 Kohlenstoffatomen darstellt.

2. Verfahren nach Anspruch 1, **dadurch gekennzeichnet, dass** die Monomere in dem Copolymer in den folgenden Gew.-%, bezogen auf das Gesamtcopolymergewicht, vorhanden sind:
2.1) von 5 bis 95 %, bevorzugt von 50 bis 95 %, und bevorzugter von 70 bis 95 Gew.-% des anionischen Monomers bzw. der anionischen Monomere,
2.2) von 5 bis 95 %, bevorzugt von 5 bis 50 %, und bevorzugter von 5 bis 30 Gew.-% des oxyalkylierten Monomers bzw. der oxyalkylierten Monomere,
2.3) von 0 bis 30 %, und bevorzugt von 0 bis 20 Gew.-% des anderen Monomers bzw. der anderen Monomere.

3. Verfahren nach einem der Ansprüche 1 oder 2, **dadurch gekennzeichnet, dass** das anionische Monomer aus Acrylsäure, Methacrylsäure und Gemischen davon ausgewählt ist.

4. Verfahren nach einem der vorhergehenden Ansprüche, **dadurch gekennzeichnet, dass** R' eine verzweigte Kohlenwasserstoffkette mit 10 bis 24 Kohlenstoffen ist, bevorzugt resultierend aus der Kondensation von linearen Alkoholen gemäss der Guerbet Reaktion, wobei R' bevorzugt aus 2-Hexyl-1-decanyl, 2-Octyl-1-dodecanyl und Gemischen davon ausgewählt ist.

5. Verfahren nach einem der vorhergehenden Ansprüche, **dadurch gekennzeichnet, dass** R' ein Polystyrolphenol ist, und bevorzugt aus Distyrolphenol, Tristyrolphenol und Gemischen davon ausgewählt ist.

6. Verfahren nach einem der vorhergehenden Ansprüche, **dadurch gekennzeichnet, dass** R ausgewählt ist aus (a) Kohlenwasserstoffresten wie Vinylresten und/oder Allylresten, (b) Resten, die Oxyalkylester bilden, wie Reste von: Acrylsäure und/oder Methacrylsäure und/oder Maleinsäure, (c) Resten, die N-Oxyalkylurethane bilden, wie Reste von: Acrylurethan und/oder Methacrylurethan und/oder α,α'-Dimethylisopropenylbenzylurethan und/oder Allylurethan, (d) Resten, die Oxyalkylether bilden, wie Reste, die Vinyloxyalkylether bilden, und/oder Reste, die Allyloxyalkylether bilden, und/oder Reste, die Oxyalkylurethane bilden, (e) Reste, die Oxyalkylamide bilden, (f) Reste, die Oxyalkylimide bilden, und (g) Gemische davon, und bevorzugter ist R ein Rest, der einen Oxyalkylmethacrylsäureester bildet.

7. Verfahren nach einem der Ansprüche 1 bis 6, **dadurch gekennzeichnet, dass** das Copolymer eine Neutralisation, in Mol-%, von jeglichen funktionellen Säuregruppen durch ein oder mehrere Neutralisierungsmittel von 0 bis 50 % aufweist, bevorzugt von 0 bis 35 %, und bevorzugter von 0 bis 20 %.

8. Verfahren nach Anspruch 7, **dadurch gekennzeichnet, dass** das Neutralisierungsmittel aus Natriumhydroxid, Kaliumhydroxid, Lithiumhydroxid oder Gemischen davon ausgewählt ist.

9. Verfahren nach einem der Ansprüche 1 bis 8, **dadurch gekennzeichnet, dass** das Dispergierungsmittel in jeglichem Schritt b) ein Acrylsäure-Homopolymer oder Copolymer ist.

10. Verfahren nach einem der Ansprüche 1 bis 9, **dadurch gekennzeichnet, dass** der Feststoffgehalt der Suspension, die während Schritt a) vermahlen wird, von 1 bis 80 % beträgt, und bevorzugt von 15 bis 60 %, bezogen auf das Trockengewicht im Verhältnis zum Gesamtgewicht der Suspension.

11. Verfahren nach einem der Ansprüche 1 bis 10, **dadurch gekennzeichnet, dass** das Mineralstoffmaterial aus Metalloxiden, wie Titandioxid und/oder Aluminiumoxid, Metallhydroxiden, wie Aluminiumhydroxid, Sulphiten, Silikaten, wie Talk und/oder Kaolintonerde und/oder Glimmer, Carbonaten, wie Calciumcarbonat und/oder Dolomit, Gips, Satinweiss und Gemischen davon ausgewählt ist.

12. Verfahren nach einem der Ansprüche 1 bis 11, **dadurch gekennzeichnet, dass** das Bindemittel ausgewählt ist aus (a) Bindemitteln natürlichen Ursprungs, wie Stärke, Proteine, wie Casein, Cellulose und Cellulosederivaten, wie Ethylhydroxyethylcellulose (EHEC) und/oder Carboxymethylcellulose (CMC), und (b) synthetischen Bindemitteln, wie Polyvinylacetat (PVA), Acrylsäure-Bindemitteln, wie Acrylsäureester-Bindemittel, und/oder Acrylnitril-Bindemitteln und/oder Styrol-Acrylsäure-Bindemitteln, Styrol-Bindemitteln, Styrol-Butadien-Bindemitteln und Butadien-Bindemitteln, und (c) Gemsichen davon.

13. Verfahren nach einem der Ansprüche 1 bis 12, **dadurch gekennzeichnet, dass** während Schritt a) das Gewichtsverhältnis von Mineralstoffmaterial : Bindemittel, das in der Suspension enthalten ist, zwischen 99:1 und 1:99 beträgt, und bevorzugt zwischen 70:30 und 30:70.

14. Verfahren nach einem der Ansprüche 1 bis 13, **dadurch gekennzeichnet, dass** das Copolymer in einer Menge eingesetzt wird, die 0,1 bis 2 %, bezogen auf das Trockengewicht im Verhältnis zum Trockengewicht des Mineralstoffmaterials, entspricht.

15. Verfahren nach einem der Ansprüche 1 bis 14, **dadurch gekennzeichnet, dass** während jeglichem Schritt b) von 0,01 bis 2 Gew.-%, bezogen auf das Trockengewicht an Mineralstoffmaterial, an wenigstens einem Dispergierungsmittel zugegeben werden.

## Revendications

1. Procédé de préparation de particules de pigment auto-liantes comprenant les étapes suivantes:
a) au moins une étape de broyage d'un ou plusieurs liants et d'une ou plusieurs matières minérales dans un environnement aqueux pour obtenir une suspension,
b) éventuellement au moins une étape de concentration de la suspension obtenue à l'étape a), éventuellement en présence d'un ou plusieurs agents dispersants,
c) éventuellement séchage de la suspension obtenue à l'étape a) ou b),
**caractérisé en ce que**:
avant et/ou pendant l'étape a), un copolymère est ajouté sous la forme d'une solution aqueuse, ledit copolymère résultant de la polymérisation de:
2.1) au moins un monomère anionique qui est un alcène,
2.2) au moins un monomère oxyalkylé qui est un alcène où le groupe oxyalkyl a un groupe terminal hydrophobe alkyle, aryle, alkyl aryle ou aryl alkyle ayant 10 à 32 atomes de carbone,
2.3) éventuellement, au moins un autre monomère qui est un ester acrylique, l'ester acrylique étant de préférence l'acrylate d'éthyle, et/ou un amide insaturé, l'amide insaturé étant de préférence l'acrylamide,
où le dit monomère oxyalkylé est un monomère de formule (I): 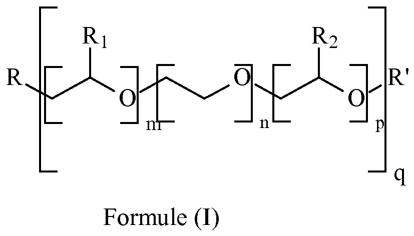 où
- m, n, p et q sont des nombres entiers ayant une valeur inférieure à 150, et au moins un des entiers m, n et p a une valeur supérieure à 0, q une valeur supérieure ou égale à 1, préférablement tels que 15 ≤ (m+n+p)q ≤ 150, très préférablement tels que 20 ≤ (m+n+p)q ≤ 60, et encore plus préférablement tels que 25 ≤ (m+n+p)q ≤ 50,
- R représente un radical ayant un groupe alcène polymérisable,
- R₁ et R₂ sont identiques ou différents et représentent des groupes hydrogène ou alkyle,
- R' représente une chaîne hydrocarbonée alkyle, aryle, alkyl aryle ou aryl alkyle ayant 10 à 32 atomes de carbone.

2. Le procédé selon la revendication 1 **caractérisé en ce que** les dits monomères sont présents dans le dit copolymère dans le % en poids suivant, par rapport au poids total de copolymère:
2.1) de 5 à 95 %, préférablement de 50 à 95 %, et plus préférablement de 70 à 95 % en poids du (des) dit(s) monomère(s) anionique(s),
2.2) de 5 à 95 %, préférablement de 5 à 50 %, et plus préférablement de 5 à 30 % en poids du (des) dit(s) monomère(s) oxyalkylé(s),
2.3) de 0 à 30 %, et préférablement de 0 à 20 % en poids du (des) dit(s) autre(s) monomère(s).

3. Le procédé selon l'une quelconque des revendications 1 ou 2, **caractérisé en ce que** le dit monomère anionique est choisi parmi l'acide acrylique, l'acide méthacrylique et leurs mélanges.

4. Le procédé selon l'une quelconque des revendications précédentes, **caractérisé en ce que** R' est une chaîne hydrocarbonée ramifiée ayant 10 à 24 atomes de carbone, préférablement résultant de la condensation d'alcools linéaires selon la réaction de Guerbet, où R' est préférablement choisi parmi le 2-hexyl-1-decanyle, 2-octyl-1-dodecanyle et leurs mélanges.

5. Le procédé selon l'une quelconque des revendications précédentes, **caractérisé en ce que** R' est un polystyryl phénol, et préférablement sélectionné parmi le distyrylphénol, le tristyrylphénol et leurs mélanges.

6. Le procédé selon l'une quelconque des revendications précédentes, **caractérisé en ce que** le radical R est choisi parmi (a) les radicaux hydrocarbonés tels que les radicaux vinyle et/ou allyle, (b) les radicaux formant des oxyalkyl esters tels que les radicaux de: l'acide acrylique et/ou l'acide méthacrylique et/ou l'acide maléique, (c) les radicaux formant des N-oxyalkylurethannes, tels que les radicaux de: acrylurethanne et/ou méthacrylurethanne et/ou α,α'-dimethylisopropenylbenzylurethanne et/ou allylurethanne, (d) radicaux formant des oxyalkyl ethers tels que les radicaux formant des vinyl oxyalkyl ethers et/ou des radicaux formant des allyl oxyalkyl ethers et/ou des radicaux formant des oxyalkylurethannes, (e) des radicaux formant des oxyalkylamides, (f) des radicaux formant des oxyalkylimides, et (g) leurs mélanges, et plus préférablement R est un radical formant un ester oxyalkylméthacrylique.

7. Le procédé selon l'une quelconque des revendications 1 à 6, **caractérisé en ce que** le dit copolymère montre un % molaire de neutralisation de tout groupe fonctionnel acide par un ou plusieurs agent(s) neutralisant de 0 à 50 %, préférablement de 0 à 35 %, et plus préférablement de 0 à 20 %.

8. Le procédé selon la revendication 7, **caractérisé en ce que** le dit agent de neutralisation est choisi parmi les hydroxydes de sodium, potassium, lithium ou leurs mélanges.

9. Le procédé selon l'une quelconque des revendications 1 à 8, **caractérisé en ce que** le dit agent dispersant dans toute étape b) est un homo ou copolymère de l'acide acrylique.

10. Le procédé selon l'une quelconque des revendications 1 à 9, **caractérisé en ce que** la teneur en matière solide de la suspension broyée pendant l'étape a) est comprise entre 1 et 80 %, et préférablement entre 15 et 60 % en poids sec par rapport au poids total de la dite suspension.

11. Le procédé selon l'une quelconque des revendications 1 à 10, **caractérisé en ce que** la dite matière minérale est choisie parmi les oxydes métalliques tels que le dioxyde de titane et/ou le trioxyde d'aluminium, les hydroxydes métalliques tels que le trihydroxyde d'aluminium, les sulfites, les silicates tels que le talc et/ou le kaolin et/ou le mica, les carbonates tels que le carbonate de calcium et/ou la dolomie, le gypse, le blanc satin et leurs mélanges.

12. Le procédé selon l'une quelconque des revendications 1 à 11, **caractérisé en ce que** le dit liant est choisi parmi (a) les liants d'origine naturelle tels que l'amidon, les protéines telles que la caséine, la cellulose et les dérivés cellulosiques tels que l' éthylhydroxy-éthylcellulose (EHEC) et/ou la carboxyméthylcellulose (CMC), et (b) les liants synthétiques tels que l'acétate de polyvinyle (PVA), les liants acryliques tels que les liants ester acrylique et/ou les liants acrylonitrile et/ou les liants styrène-acrylique, les liants styrène, les liants styrène-butadiène et les liants butadiène, et (c) leurs mélanges.

13. Le procédé selon l'une quelconque des revendications 1 à 12, **caractérisé en ce que** pendant l'étape a) la proportion en poids matière minérale : liant contenue dans la suspension est comprise entre 99:1 et 1:99, et préférablement entre 70:30 et 30:70.

14. Le procédé selon l'une quelconque des revendications 1 à 13, **caractérisé en ce que** le dit copolymère est mis en oeuvre en une quantité correspondante à 0,1 à 2 % en poids sec par rapport au poids sec de matière minérale.

15. Le procédé selon l'une quelconque des revendications 1 à 14, caractérisé en ce pendant toute étape b) on ajoute de 0,01 à 2 % en poids, par rapport au poids sec de matière minérale, d'au moins un agent dispersant.
